# EUROPÄISCHE PATENTSCHRIFT

(11) **EP 3 587 530 B1**
(45) Veröffentlichungstag und Bekanntmachung des Hinweises auf die Patenterteilung: **29.01.2025**
(21) Anmeldenummer: 18179485.0
(22) Anmeldetag: 25.06.2018
(51) Int. Cl.: C09J 175/14, C09J 175/06, C08G 18/42, C08G 18/68, C08G 18/73, C08G 18/75, C08G 18/72, C08G 18/79, B32B 27/40

(54) **VERPACKUNGSKLEBSTOFFE BASIEREND AUF NACHWACHSENDEN ROHSTOFFEN**
PACKAGE ADHESIVES BASED ON RENEWABLE RAW MATERIALS
ADHÉSIFS POUR DES EMBALLAGES À BASE DE MATIÈRES PREMIÈRES RENOUVELABLES

(43) Veröffentlichungstag der Anmeldung: 01.01.2020
(73) Patentinhaber: Henkel AG & Co. KGaA, 40589 Düsseldorf (DE)
(72) Erfinder: Brandt, Adrian, 45219 Essen (DE); Beck, Horst, 41470 Neuss (DE); Blodau, Marcel, 47807 Krefeld (DE); Kux, Alexander, 40789 Monheim (DE); Krlejova, Andrea, 40476 Düsseldorf (DE)

(56) Entgegenhaltungen:
- EP-A1- 3 728 395
- WO-A1-2018/095962
- ERA V ET AL: "FATTY ACID ESTERS FROM BETULINOL", JOURNAL OF THE AMERICAN OIL CHEMISTS' SOCIETY (JA, SPRINGER, DE, vol. 1, 1 January 1981 (1981-01-01), pages 20 - 23, XP008075263, ISSN: 0003-021X
- JEKATERINA JEROMENOK: "Polymers from the Natural Product Betulin; A Microstructural Investigation", 12 March 2012 (2012-03-12), Germany, XP055533576, Retrieved from the Internet <URL:https://d-nb.info/1025584961/34> [retrieved on 20181212], DOI: 10.1002/marc.201600748

## Beschreibung

Die vorliegende Erfindung betrifft Klebstoffzusammensetzungen, insbesondere Verpackungsklebstoffe, die Polyesterpolyole auf Basis von Betulin enthalten sowie ein Verfahren zu deren Herstellung. Des Weiteren betrifft die vorliegende Erfindung ein Verfahren zum Verkleben von folienförmigen Substraten unter Verwendung der beschriebenen Klebstoffzusammensetzung.

Im Rahmen des wachsenden Umweltbewusstseins und der anhaltenden Nachhaltigkeitsdiskussion besteht eine vermehrte Nachfrage nach nachhaltigen Verpackungslösungen basierend auf nachwachsenden Rohstoffen. Es besteht somit der Bedarf an Klebstoffen für Verpackungen, die zu einem höchstmöglichen Anteil aus nachwachsenden Rohstoffen bestehen. Das Ziel dabei ist es Verpackungssysteme mit annähernd 100% nachwachsender Rohstoffbasis herzustellen. Dadurch soll ein wichtiger Beitrag zur Einhaltung der Nachhaltigkeitsziele, die insbesondere mit dem Schlagwort des Carbon Footprint verbunden sind, geleistet werden.

Des Weiteren ist es insbesondere bei Lebensmittelverpackungen erstrebenswert zusätzlich zum Anteil der nachwachsenden Rohstoffe, zusätzlich verbesserte technische Eigenschaften zu erzielen, wie beispielsweise Beständigkeit gegenüber aggressiven Füllgütern oder, ebenfalls im Rahmen der Energieeinsparung, eine mögliche Aushärtung des verwendeten Klebstoffsystems bei Raumtemperatur.

In diesem Zusammenhang ist insbesondere Betulin, eine Verbindung aus der Gruppe der pentacyclischen Triterpene in den Fokus gerückt.

WO 2006/053936 beschreibt ein Verfahren zur Herstellung von Polymeren auf Basis von biologisch abbaubaren oder im Wesentlichen erneuerbaren Rohmaterialien, die durch freie Radikalreaktion vernetzt werden können, wobei Betulin als eine mögliche Diolkomponente genannt ist.

V. Erä und Jääskeläinen beschreiben im Journal of the American Oil Chemists" Society (JAOCS) von Januar 1981 (Seite 20 bis 23) einen Syntheseweg zur Herstellung von Fettsäureestern von Betulin über den Weg des Säurechlorids.

V.E. Nemilov et al beschreiben im Russian Journal of Applied Chemistry, Vol. 78, No. 7, 2005, Seite 1162-1165, eine kinetische Studie zur Polykondensation von Betulin mit Adipinsäure, wobei insbesondere das unterschiedliche Verhalten der primären und sekundären Hydroxylgruppe des Betulins sowie dessen Isopropenyl-Gruppen im Vordergrund stehen.

WO 2018/095962 A1 offenbart eine Klebstoffzusammensetzung umfassend ein NCOterminiertes MDI-Präpolymer und eine Polyolmischung umfassend Trimethylolpropan, Polypropylenglycol und Rizinusöl. Besagte Klebstoffzusammensetzung wird als Kaschierklebstoff für Lebensmittelverpackungen verwendet.

Die zurzeit erhältlichen Klebstoffsysteme, die zumindest einen gewissen Anteil an nachwachsenden Rohstoffe enthalten, weisen den Nachteil auf, dass sie gegenüber herkömmlichen Systemen auf Basis petrolchemischer Rohstoffe eine verringerte Leistungsfähigkeit aufweisen, was sich unter anderem in verringerten Haftwerten und Beständigkeit ausdrückt.

Die Aufgabe der vorliegenden Erfindung ist daher die Bereitstellung einer Klebstoffzusammensetzung mit einem hohen Anteil an nachwachsenden Rohstoffen, die eine gegenüber herkömmlichen Systemen vergleichbare oder bessere Leistungsfähigkeit aufweist und insbesondere für die Herstellung von Lebensmittelverpackungen geeignet ist.

Es wurde überraschend gefunden, dass diese Aufgabe durch eine Klebstoffzusammensetzung gelöst wird, die ein Polyesterpolyol auf Basis von Betulin und eine NCO-terminierte Verbindung enthält.

Ein erster Gegenstand der vorliegenden Erfindung ist daher eine Klebstoffzusammensetzung umfassend
a) mindestens ein Polyesterpolyol auf Basis von Betulin und
b) mindestens eine NCO-terminierte Verbindung-
   wobei das Polyesterpolyol aus einer Reaktionsmischung gewonnen wird, die die folgenden Monomereinheiten umfasst:
      i) Betulin in einer Menge von 5- 50 Gew.-% vorzugsweise 25-35 Gew.-%
      ii) Dicarbonsäure in einer Menge von 5 bis 45 Gew.-%, vorzugsweise 8 bis 40 Gew.-%; und
      iii) Triglycerid in einer Menge von 20 bis 80 Gew.-%, vorzugsweise 40 bis 70 Gew.-%.
   jeweils bezogen auf das Gesamtgewicht der Monomereinheiten,
   dadurch gekennzeichnet, dass der Anteil an Polyesterpolyol auf Basis von Betulin 20-90 Gew.-% beträgt bezogen auf das Gesamtgewicht der lösungsmittelfreien Klebstoffzusammensetzung.

Es wurde überraschend gefunden, dass auf diese Weise eine Klebstoffzusammensetzung bereitgestellt werden kann, die bis zu 100% aus nachwachsenden Rohstoffen zugänglich ist und eine gegenüber herkömmlichen Klebstoffzusammensetzungen vergleichbare, in einigen Bereichen sogar verbesserte, Leistungsfähigkeit aufweist.

In einer bevorzugten Ausführungsform weist das in der erfindungsgemäßen Klebstoffzusammensetzung verwendete Polyesterpolyol einen Anteil an Betulin-Struktureinheiten von 6 bis 65 Mol-%, vorzugsweise 10 bis 50 Mol-% auf.

In einer bevorzugten Ausführungsform weist das Triglycerid mindestens eine freie Hydroxygruppe auf. Dabei kann die freie Hydroxygruppe bereits im Triglycerid vorhanden sein oder durch Funktionalisierung eingeführt werden.

Die Zusammensetzung der Reaktionsmischung, aus der das in der erfindungsgemäßen Klebstoffzusammensetzung enthaltende Polyesterpolyol gewonnen wird, kann gemäß den zu erreichenden Eigenschaften des Polyesterpolyols, wie beispielsweise seiner Viskosität oder seiner Glasübergangstemperatur angepasst werden. Es hat sich jedoch als vorteilhaft erwiesen, wenn der Anteil an Betulin in der Reaktionsmischung nicht zu groß ist, um eventuellen Problemen bei der Verarbeitung der Rohstoffe vorzubeugen.

Das Polyesterpolyol der erfindungsgemäßen Zusammensetzung daher aus einer Reaktionsmischung gewonnen, die die folgenden Monomereinheiten als Ausgangskomponenten umfasst:
i) Betulin in einer Menge von 5 bis 50 Gew.-%, vorzugsweise 25 bis 35 Gew.-%;
ii) Dicarbonsäure in einer Menge von 5 bis 45 Gew.-%, vorzugsweise 8 bis 40 Gew.-%; und
iii) Triglycerid in einer Menge von 20 bis 80 Gew.-%, vorzugsweise 40 bis 70 Gew.-%,
jeweils bezogen auf das Gesamtgewicht der Monomereinheiten.

Vorzugsweise handelt es sich bei der Dicarbonsäure um eine Dicarbonsäure, die ausgewählt ist aus der Gruppe bestehend aus aliphatischen Dicarbonsäuren mit 4 bis 24 Kohlenstoffatomen, aromatischen Dicarbonsäuren, Dimerfettsäuren sowie Mischungen und Derivaten davon. Bei den Derivaten kann es sich beispielsweise um Ester, Säurechloride oder Anhydride der Dicarbonsäure handeln.

In einer besonders bevorzugten Ausführungsform ist die mindestens eine Dicarbonsäure eine aliphatische Dicarbonsäure ausgewählt aus der Gruppe bestehend aus Bernsteinsäure, Adipinsäure, Azelainsäure, Sebazinsäure, Dodekandisäure, Tetradekandisäure und Mischungen hiervon.

Geeignete aromatische Dicarbonsäuren sind vorzugsweise ausgewählt aus der Gruppe bestehend aus Phthalsäure, Isophthalsäure, Terephthalsäure, Furandicarbonsäure, deren Anhydride und Methylester, und Mischungen hiervon.

In einer bevorzugten Ausführungsform handelt es sich bei der oder den Dimerfettsäuren um Dimere von Fettsäuren der allgemeinen Formel CₙH₂ₙ₊₁COOH, wobei n eine ganze Zahl von 4 bis 33, vorzugsweise 7 bis 17 ist. Vorzugsweise werden neben Dimerfettsäuren auch deren Derivate eingesetzt, die beispielsweise durch Hydrieren oder Destillieren der entsprechenden Dimerfettsäure erhalten werden. Weiterhin bevorzugt ist die Fettsäure ausgewählt aus der Gruppe bestehend aus Carylsäure, Caprinsäure, Laurinsäure, Myristinsäure, Palmitinsäure, Stearinsäure, den Derivaten dieser Fettsäuren sowie Mischungen hiervon.

Das mindestens eine Triglycerid ist vorzugsweise ausgewählt oder abgeleitet von einer Verbindung ausgewählt aus der Gruppe bestehend aus Sojaöl, Leinöl, Sonnenblumenöl, Distelöl, Rapsöl, Pugiernusöl, Lichtbussbaumöl, Traubenkernöl, Canolaöl, Maiskeimöl, Cashewkernöl, Fischöl, Rizinusöl, Tallöl, Kokosöl, Palmöl, Palmkernöl, Olivenöl und Mischungen davon. Besonders bevorzugt ist das bezeichnete Triglycerid ausgewählt aus der Gruppe bestehend aus Rizinusöl, Sojaöl und Derivaten dieser Verbindungen. Weiterhin können auch synthetische oder biotechnisch hergestellte Triglyceride verwendet werden.

Die erfindungsgemäße Klebstoffzusammensetzung enthält weiterhin eine NCO-terminierte Verbindung. Vorzugsweise ist die NCO-terminierte Verbindung ausgewählt aus der Gruppe bestehend aus 1,5-Naphthylendiisocyanat (NDI), 2,4'- oder 4,4'-Diphenylmethandiisocyanat (MDI), Isomere des Toluylendiisocyanats (TDI), Methylentriphenyltriisocyanat (MIT), hydriertes MDI (H12MDI), Tetramethylxylylendiisocyanat (TMXDI), 1-Isocyanatomethyl-3-isocyanato-1,5,5-trimethylcyclohexan (IPDI), Xylylendiisocyanat (XDI), Hexan-1,6-diisocyanat (HDI), Pentamethylendiisocyanat (PDI) und Dicyclohexylmethandiisocyanat sowie Mischungen davon.

In einer bevorzugten Ausführungsform wird die NCO-terminierte Verbindung in Form von Oligomeren, insbesondere Trimere, oder in Form von Polymeren eingesetzt. Besonders bevorzugt wird die NCO-terminierte Verbindung in Form von Prepolymeren eingesetzt, die durch Umsetzung eines Überschusses eines Polyisocyanats mit einer OH-Gruppen und/oder NH-Gruppen tragenden Verbindung erhalten werden. Bei den Polyisocyanaten kann es sich beispielsweise um die oben genannten handeln. Als NH-Gruppen tragende Verbindungen können beispielsweise Polyetheramine eingesetzt werden.

Besonders bevorzugt ist eine Ausführungsform der vorliegenden Erfindung, in der auch die NCO-Gruppen enthaltende Verbindung ausgehend von nachwachsenden Rohstoffen hergestellt wird. Daher sind Verbindungen, wie beispielsweise Pentamethylendiisocyanat, besonders bevorzugt. Vorzugsweise wird das Pentamethylendiisocyanat als Trimer eingesetzt.

Die erfindungsgemäße Klebstoffzusammensetzung weist das mindestens eine Polyesterpolyol auf Basis von Betulin in einer Menge von 20 bis 90 Gew.-%, vorzugsweise 30 bis 80 Gew.-%, besonders bevorzugt 40 bis 60 Gew.-% auf, jeweils bezogen auf das Gesamtgewicht der lösungsmittelfreien Klebstoffzusammensetzung.

In einer weiterhin bevorzugten Ausführungsform enthält die erfindungsgemäße Klebstoffzusammensetzung die NCO-terminierte Verbindung in einer Menge von 10 bis 80 Gew.-%, vorzugsweise 20 bis 70 Gew.-%, insbesondere 30 bis 60 Gew.-%, jeweils bezogen auf das Gesamtgewicht der lösungsmittelfreien Klebstoffzusammensetzung.

In einer bevorzugten Ausführungsform weist die erfindungsgemäße Klebstoffzusammensetzung einen Anteil an nachwachsenden Rohstoffen von 50 bis 100 Gew.-%, vorzugsweise 60 bis 95 Gew.-% auf, jeweils bezogen auf das Gesamtgewicht der lösungsmittelfreien Klebstoffzusammensetzung.

Es wurde überraschend gefunden, dass erfindungsgemäße Klebstoffzusammensetzung eine besonders vorteilhafte Verarbeitbarkeit aufweist, wenn das Verhältnis von NCO-Gruppen zu OH-Gruppen in der Zusammensetzung nicht mehr als 1 zu 6 beträgt. Daher ist eine Ausführungsform der erfindungsgemäßen Klebstoffzusammensetzung bevorzugt, in der die Klebstoffzusammensetzung ein Verhältnis von NCO:OH von 1 bis 5, vorzugsweise 1,2 bis 3 aufweist.

Insbesondere an Lebensmittelverpackungen sowie an die bei deren Herstellung verwendeten Substanzen werden hohe Anforderungen gestellt. So stehen neben den mechanischen Eigenschaften insbesondere gesundheitliche Aspekte im Vordergrund. Im Rahmen der vorliegenden Erfindung wurde überraschend gefunden, dass durch den Einsatz eines Polyesterpolyols auf Basis von Betulin die Bildung sogenannter kritischer migrierfähiger Zyklen verhindert werden kann. Unter kritischen migrierfähigen Zyklen werden Verbindungen verstanden, die in der Lage sind aus dem Verpackungsmaterial in das verpackte Produkt, beispielsweise ein Lebensmittel zu migrieren und die somit ein gesundheitsschädliches Potential aufweisen. Daher ist eine Ausführungsform der erfindungsgemäßen Klebstoffzusammensetzung bevorzugt, in der der Anteil an kritischen migrierfähigen Bestandteilen in der Klebstoffzusammensetzung weniger als 300 ppm, vorzugsweise weniger als 200 ppm und besonders bevorzugt weniger als 50 ppm beträgt, wobei die ppm Gewichtsanteile bezeichnen und sich die Angaben auf das Gesamtgewicht der lösungsmittelfreien Klebstoffzusammensetzung beziehen.

Die Konsistenz der erfindungsgemäßen Klebstoffzusammensetzung kann gemäß den jeweiligen Anforderungen angepasst werden, beispielsweise durch Zugabe von geeigneten Lösungsmitteln. In einer bevorzugten Ausführungsform weist die erfindungsgemäße Zusammensetzung weiterhin ein oder mehrere Lösungsmittel auf.

Unter Berücksichtigung der erheblichen ökologischen und ökonomischen Anforderungen, die mit der Verwendung insbesondere organischer Lösungsmittel verbunden sind, ist es jedoch vorteilhaft, auf den Einsatz von Lösungsmittel zu verzichten. Daher ist eine Ausführungsform bevorzugt, in der die erfindungsgemäße Klebstoffzusammensetzung frei von Lösungsmitteln ist. Es wurde weiterhin überraschend gefunden, dass auf den Einsatz von Lösungsmittel ganz oder teilweise verzichtet werden kann, wenn die Eigenschaften des verwendeten Polyesterpolyols entsprechend gewählt werden. In diesem Zusammenhang ist daher eine Ausführungsform der erfindungsgemäßen Klebstoffzusammensetzung bevorzugt, in der das eingesetzte Polyesterpolyol auf Basis von Betulin eine OH-Zahl von 5 bis 200 mg KOH/g, vorzugsweise 20 bis 140 mg KOH/g aufweist. Die Hydroxylzahl (OH-Zahl) gilt erfindungsgemäß als ein Maß für die Anzahl an freien Hydroxygruppen in einer jeweils definierten Bezugsmenge. Die OH-Zahl kann dabei experimentell mittels potentiometrischer Titration oder mittels Säure-Base-Titration bestimmt werden.

Die erfindungsgemäße Klebstoffzusammensetzung kann als 1-Komponenten-System (1K) oder als 2-Komponenten-System (2K) verwendet werden. Diese Systeme zeichnen sich dadurch aus, dass die Vernetzung und somit Aushärtung des Klebstoffs durch eine Reaktion der NCO-Gruppen erfolgt und werden auch als Reaktivklebstoffe bezeichnet.

1K-Systeme zeichnen sich dadurch aus, dass sie als Hauptbestandteile Polyurethan-Prepolymere aufweisen, die noch über freie NCO-Gruppen verfügen. In einer bevorzugten Ausführungsform handelt es sich bei der erfindungsgemäßen Klebstoffzusammensetzung um ein 1K-System, bei dem die Polyurethan-Prepolymere durch Umsetzung des mindestens einen Polyesterpolyols auf Basis von Betulin mit der mindestens einen NCO-terminierten Verbindung erhalten werden.

2K-Systeme zeichnen sich dadurch aus, dass sie eine Komponente mit mindestens einer NCO-Gruppen-haltigen Verbindung und eine zweite Komponente mit mindestens einer als Vernetzer wirkenden Verbindung, die mindestens zwei mit NCO-Gruppen reagierende funktionelle Gruppen aufweist, umfassen, wobei die Komponenten erst unmittelbar vor der Anwendung zusammengegeben werden. In einer bevorzugten Ausführungsform handelt es sich bei der erfindungsgemäßen Klebstoffzusammensetzung um ein 2K-System. In einer bevorzugten Ausführungsform stellt das Polyesterpolyol auf Basis von Betulin eine Komponente und die NCO-terminierte Verbindung die zweite Komponente dar. In einer alternativ bevorzugten Ausführungsform wird das Polyesterpolyol auf Basis von Betulin mit einer Isocyanat-Verbindung zu einer NCO-terminierten Verbindung umgesetzt, welche dann eine erste Komponente darstellt, während als zweite Komponente eine Polyol-Verbindung eingesetzt wird.

In einer bevorzugten Ausführungsform ist die erfindungsgemäße Klebstoffzusammensetzung lösemittelhaltig, lösemittelfrei oder eine Dispersion.

Die erfindungsgemäße Klebstoffzusammensetzung kann weiterhin weitere Bestandteile umfassen, wie beispielsweise Haftvermittler. Bei dem Haftvermittler handelt es sich vorzugsweise um eine Verbindung, die aus der Gruppe der Alkoxysilane ausgewählt ist. Dabei kann es sich um organofunktionelle Silane, wie (meth)acryloxyfunktionelle, epoxidfunktionelle, aminfunktionelle oder nicht reaktiv substituierte Silane handeln.

In einer alternativen Ausführungsform ist der Haftvermittler vorzugsweise ausgewählt aus Verbindungen, die Sulfonimid- und/oder Amidosulfonat-Gruppen aufweisen. Bei den Verbindungen, die Sulfonimid-Gruppen aufweisen, handelt es sich um Verbindungen, die eine SO₂-NH-C(O)-Struktur enthalten. Diese Verbindungen weisen vorzugsweise ein Molekulargewicht unter 500 g/mol auf, wobei das Molekulargewicht auf Grundlage der Molekülstruktur berechnet und experimentell massenspektrometrisch bestimmt werden kann.

In einer bevorzugten Ausführungsform handelt es sich bei dem Haftvermittler mit Sulfonimid-Struktur oder Amidosulfonat-Struktur um eine oder mehrere der folgenden Verbindungen I bis VI.
I) R₁-NH-SO₃H und deren Salze mit R₁ = CₙH₂ₙ₊₁ mit n = 1 bis 10, Cyclohexyl, Phenyl, Alkylsubstituiertes Cyclohexyl oder Phenyl;
II) R'₄-SO₂-NH-C(O)-R₄ mit R₄, R'₄ = CₙH₂ₙ₊₁ mit n = 1 bis 10, Cyclohexyl, Phenyl, Alkylsubstituiertes Cyclohexyl oder Phenyl; oder mit solchen R₄ und R'₄, die eine gemeinsame, gegebenenfalls Alkyl-substituierte C₂- oder C₃-Brücke als Bestandteil eines aliphatischen oder aromatischen 5- oder 6-Ringes bilden, wobei R₄ und R'₄ gleich oder verschieden sind;
III) R'₅-O-SO₂-NH-C(O)-R₅ mit R₅, R'₅ = CₙH₂ₙ₊₁ mit n = 1 bis 10, Cyclohexyl, Phenyl, Alkylsubstituiertes Cyclohexyl oder Phenyl; oder mit solchen R₄ und R'₄, die eine gemeinsame, gegebenenfalls Alkyl-substituierte C₂- oder C₃-Brücke als Bestandteil eines aliphatischen oder aromatischen 5- oder 6-Ringes bilden, wobei R₅ und R'₅ gleich oder verschieden sind;
IV) 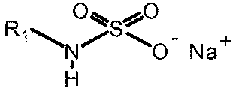 mit R₁ wie zu I) definiert.
V) 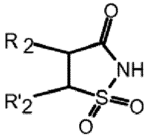 mit R₂, R'₂ = CₙH₂ₙ₊₁ mit n = 1 bis 10, Cyclohexyl, Phenyl, Alkylsubstituiertes Cyclohexyl oder Phenyl; oder mit solchen R₂ und R'₂, die eine gemeinsame, gegebenenfalls Alkyl-substituierte C₂- oder C₃-Brücke als Bestandteil eines aliphatischen oder aromatischen 5- oder 6-Ringes bilden, wobei R₂ und R'₂ gleich oder verschieden sind;
VI) 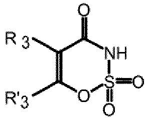 mit R₃, R'₃ = CnH2n+1 mit n = 1 bis 10, Cyclohexyl, Phenyl, Alkylsubstituiertes Cyclohexyl oder Phenyl; oder mit solchen R₃ und R'₃, die eine gemeinsame, gegebenenfalls Alkyl-substituierte C₂- oder C₃-Brücke als Bestandteil eines aliphatischen oder aromatischen 5- oder 6-Ringes bilden, wobei R₃ und R'₃ gleich oder verschieden sind.

Insbesondere werden als Haftvermittler in der erfindungsgemäßen Klebstoffzusammensetzung substituierte Amidosulfonate eingesetzt, wie Cyclohexylamidosulfonat, substituierte oder unsubstituierte Benzolsulfimide (Benzoesäuresulfimide) wie 1,2-Benzisothiazol-3(2H)-on-1,1-dioxid, oder Alkyl-substituierte 3,4-Dihydro-1,2,3-oxathiazin-4-on-2,2-dioxide (1,2,3-Oxathiazin-4(3H)-on-2,2-dioxide) wie 6-Methyl-3,4-dihydro-1,2-3-oxathiazin-4-on-2,2-dioxid.

Weiterhin können als Haftvermittler auch Mischungen der oben genannten Verbindungen eingesetzt werden.

In einer bevorzugten Ausführungsform kann die erfindungsgemäße Klebstoffzusammensetzung weitere Bestandteile und Zusatzstoffe enthalten. Bei diesen weiteren Bestandteilen und Zusatzstoffen handelt es sich vorzugsweise um Weichmacher, Katalysatoren, Harze, Stabilisatoren, Pigmente und/oder Füllstoffe.

Bei dem Katalysator handelt es sich vorzugsweise um eine Metallverbindung von Sn, Ti, Fe, Zn, Bi, Hg, Pb oder um tertiäre Amine.

Besonders bevorzugt handelt es sich bei dem Katalysator um Titanate wie Tetrabutyltitanat und Tetrapropyltitanat, Zinncarboxylate wie Dibutlyzinndilaurat (DBTL), Dibutlyzinndiacetat, Zinnoctoat, Zinnoxide wie Dibutlyzinnoxid und Dioctylzinnoxid, Organoaluminiumverbindungen wie Aluminiumtrisacetalacetonat, Aluminiumtrisethylacetonat, Chelatverbindungen wie Titantetraacetylacetonat, Aminverbindungen wie Triethylendiamin, Guanidin, Diphenylguanidin, 2,4,6-Tris(dimethylaminomethyl)phenol, Morpholin, N-Methylmorpholin, 2-Ethyl-4-methylimidazol, 1,8-Diazabicyclo-(5,4,0)-undecan-7 (DBU), 1,4-Diazabicyclooktan (DABCO), 1,4-Diazabicyclo[2,2,2]octan, N,N-Dimethylpiperazin, 1,8-Diazabicyclo[5,4,0]undec-7-en, Dimorpholinodimethylether, Dimorpholinodiethylether (DMDEE) und Mischungen hiervon.

Die Menge des Kataysators liegt dabei vorzugweise bei 0,01 bis 5 Gew.-%, besonders bevorzugt bei 0,05 bis 2 Gew.-%, bezogen auf das Gesamtgewicht der lösungsmittelfreien Klebstoffzusammensetzung.

In der Lebensmittelverpackungsindustrie werden in erster Linie folienförmige Substrate verwendet, wie Metallfolien oder Kunststofffolien. Klebstoffe, die in diesem Zusammenhang verwendet werden, werden als Laminier- oder Kaschierklebstoffe bezeichnet. In einer bevorzugten Ausführungsform handelt es sich bei der erfindungsgemäßen Klebstoffzusammensetzung um eine Kaschierklebstoffzusammensetzung. In einer weiterhin bevorzugten Ausführungsform handelt es sich bei der erfindungsgemäßen Klebstoffzusammensetzung um eine Laminierklebstoffzusammensetzung.

Ein weiterer Gegenstand der vorliegenden Erfindung ist ein Verfahren zur Herstellung der erfindungsgemäßen Klebstoffzusammensetzung. Das erfindungsgemäße Verfahren umfasst die folgenden Schritte:
a) Bereitstellen einer Mischung umfassend
   i) Betulin in einer Menge von 5- 50 Gew.-% vorzugsweise 25-35 Gew.-%
   ii) Dicarbonsäure in einer Menge von 5 bis 45 Gew.-%, vorzugsweise 8 bis 40 Gew.-%; und
   iii) Triglycerid in einer Menge von 20 bis 80 Gew.-%, vorzugsweise 40 bis 70 Gew.-%. jeweils bezogen auf das Gesamtgewicht der Monomereinheiten,
b) Umsetzen des aus der Mischung in Schritt a) erhaltenen Reaktionsprodukts mit einer NCO-terminierten Verbindung.

In einer bevorzugten Ausführungsform wird das durch die Umsetzung in Schritt b) erhaltene Produkt in einem weiteren Schritt mit einer weiteren Polyol-Komponente umgesetzt um die erfindungsgemäße Klebstoffzusammensetzung zu erhalten.

Ein weiterer Gegenstand der vorliegenden Erfindung ist ein Klebstoff, der durch Aushärten der erfindungsgemäßen Klebstoffzusammensetzung erhältlich ist. Es wurde überraschend gefunden, dass die Kombination der Bestandteile der erfindungsgemäßen Klebstoffzusammensetzung eine energieeffiziente Aushärtung bei niedrigen Temperaturen erlaubt. Daher ist eine Ausführungsform bevorzugt, in der das Aushärten der erfindungsgemäßen Klebstoffzusammensetzung bei weniger als 80°C, vorzugsweise weniger als 60°C, besonders bevorzugt weniger als 40°C und insbesondere bei Raumtemperatur erfolgt.

Der erfindungsgemäße Klebstoff ist insbesondere für das Verkleben folienförmiger Substrate geeignet. Ein Parameter, der bei einer solchen Anwendung von Bedeutung ist, ist die Verbundhaftung, die das verklebte Material und somit der Klebstoff aufweist. In einer bevorzugten Ausführungsform weist der erfindungsgemäße Klebstoff eine Verbundhaftung von mehr als 2,0 N/15mm auf, vorzugsweise mehr als 3,0 N/15mm, wobei die Verbundhaftung gemäß DIN 53357 bestimmt wurde. Es wurde überraschend gefunden, dass diese Werte auch unter Belastung realisiert werden können, etwa nach Sterilisation und Beutelsterilisation. Die Sterilisation kann dabei beispielsweise mittels UV-Bestrahlung, mittels Hitze oder Dampf vorgenommen werden. Es wurde überraschend gefunden, dass die Verbundhaftung auch bei aggressiven Füllgütern, wie beispielsweise Ölsäure enthaltende Inhalte, realisiert werden kann.

Die erfindungsgemäße Klebstoffzusammensetzung und der erfindungsgemäße Klebstoff sind insbesondere für das Verkleben von folienförmigen Substraten, insbesondere für die Herstellung von Lebensmittelverpackungen geeignet. Daher ist ein weiterer Gegenstand der vorliegenden Erfindung die Verwendung der erfindungsgemäßen Klebstoffzusammensetzung und/oder des erfindungsgemäßen Klebstoffs als Kaschier- und/oder Laminierklebstoff. In einer bevorzugten Ausführungsform wird die erfindungsgemäße Klebstoffzusammensetzung und/oder der erfindungsgemäße Klebstoff zum Verkleben folienförmiger Substrate verwendet.

Ein weiterer Gegenstand der vorliegenden Erfindung ist ein Verfahren zum Verkleben von mindestens zwei Substraten, wobei auf mindestens ein Substrat die erfindungsgemäße Klebstoffzusammensetzung aufgetragen und danach die mindestens zwei Substrate zusammengefügt werden. In einer bevorzugten Ausführungsform weist mindestens eines der Substrate eine Metalloberfläche oder eine bedruckte Oberfläche aufweist. In einer weiteren bevorzugten Ausführungsform handelt es sich bei den mindestens zwei Substraten um folienförmige Substrate, vorzugsweise um Metallfolien und/oder Kunststofffolien.

Als Folienmaterialien werden in dem erfindungsgemäßen Verfahren vorzugsweise flexible Folien eingesetzt. Neben Metallfolien, wie beispielsweise Aluminiumfolien, handelt es sich beispielsweise um thermoplastische Kunststoffe in Folienform, wie Polyolefine, Polyethylen (PE) oder Polypropylen (PP, CPP, OPP), Polyvinylchlord (PVC), Polystyrol (PS), Polyester wie PET, Polyamid, natürliche Polymere wie Cellophan oder Papier. Die verwendeten Folienmaterialien können vor der Verwendung oberflächenmodifiziert werden, beispielsweise durch Modifizieren der Polymere mit funktionellen Gruppen oder durch Corona- oder Plasmabehandlung oder Abflämmen. Weiterhin können zusätzliche Komponenten, beispielsweise Pigmente und Farbstoffe enthalten sein. Das Folienmaterial kann weiterhin geschäumte Schichten umfassen.

In einer bevorzugten Ausführungsform beträgt die Menge an Klebstoff, die aufgetragen wird 1 bis 100 g/m², vorzugsweise 2 bis 70 g/m².

In einer bevorzugten Ausführungsform können die Substrate gegebenenfalls einer Vorbehandlung unterworfen werden und/oder die beiden Substrate unter Druck zusammengefügt werden.

Ein weiterer Gegenstand der vorliegenden Erfindung ist ein Artikel, der die erfindungsgemäße Klebstoffzusammensetzung oder den erfindungsgemäßen Klebstoff umfasst. In einer bevorzugten Ausführungsform ist der Artikel gemäß dem erfindungsgemäßen Verfahren erhältlich. Vorzugsweise handelt es sich bei dem Artikel um ein mehrschichtiges Substrat, insbesondere für Verpackungen für Lebensmittel und pharmazeutische Erzeugnisse.

Die vorliegende Erfindung wird anhand der nachfolgenden Beispiele genauer verdeutlicht, wobei diese nicht als Einschränkung des Erfindungsgedankens zu verstehen sind.

### Beispiele:

Tabelle 1 zeigt die Monomerzusammensetzung eines Polyesterpolyols wie in der erfindungsgemäßen Klebstoffzusammensetzung verwendet, wobei jeweils die Gewichtsmengen in Gramm angegeben sind. Die Angaben in Klammern geben die Anteile in Mol-% an.

**Tabelle 1:**

| Monomer | Beispiel 1 | Beispiel 2 |
|---|---|---|
| Betulin | 64,78 g (30,5 Mol-%) | 75,78 (17,8 Mol-%) |
| Rizinusöl | 135,16 g (30,5 Mol-%) | 379,40 (42,7 Mol-%) |
| Bersteinsäure | 22,08 g (39 Mol-%) | 44,85 (39,5 Mol-%) |

Tabelle 2 fasst ausgewählte Eigenschaften des Polyesterpolyols zusammen.

**Tabelle 2:**

| | Viskosität (140°C) | Tg* | Polydispersität | OH-Zahl | Mₙ |
|---|---|---|---|---|---|
| Beispiel 1 | 180 mPas | -35°C | 2,3 | 71 mg KOH/g | 2508 g/mol |
| Beispiel 2 | 100 mPas | -51 ° C | 2,5 | 70 mg KOH/g | 2984 g/mol |

| | | | | | |
|---|---|---|---|---|---|
| *T_{g} = Glasübergangstemperatur (DSC) | | | | | |

Aus der Molmassenverteilungskurve, die mittels GPC bestimmt wurde, wurden die relativen zahlen- und gewichtsmittleren Molmassenmittelswerte ermittelt und daraus die Polydispersität bestimmt.

Die Polyester wiesen jeweils eine Säurezahl von 1,8 mg KOH/g Probe auf.

Die Polyester wurden auf migrierfähige Zyklen untersucht. Dazu wurden Proben mit Diisocyanat 4,4'-MDI (NCO/OH 1,43) versetzt, gemischt und auf Teflonpapier ausgegossen. Die Reaktionsmischung wurde für 14 Tage unter Raumluftatmosphäre ausgehärtet. Die erhaltenen Filme wurden wie folgt weiterverarbeitet und mittels GC-MS Methode analysiert.

Die erhaltenen Addukte und eine Referenz wurden in Headspace-Vials eingewogen und mit 99,8 %igem Ethanol versetzt. Anschließend wurden die Gebinde dicht verschlossen und die Proben für zwei Stunden bei 70°C extrahiert. Von den Extrakten wurde jeweils 1 ml abgenommen und mit internem Standard Naphthalin D-8 versetzt und mittels GC-MS vermessen. Pro Probe wurde 1 g Substanz extrahiert. Die Identifizierung erfolgte mittels manueller Spektreninterpretation. Die Quantifizierung erfolgte gegen Naphthalin D-8 mit Resonanzfaktor 1 (RF = 1). Es konnten keine kritischen zyklischen Verbindungen nachgewiesen werden.

Die Polyester wurden mit einer NCO-terminierten Verbindung umgesetzt, wobei ein Verhältnis von NCO/OH von 2,32 gewählt wurde. Als NCO-terminierte Verbindung wurde die kommerziell erhältliche NCO-Komponente Loctite Liofol LA 7371 verwendet sowie eine Mischung aus Pentamethylendiisocyanat-Trimer (PDI-Trimer), 1-lsocyanatomethyl-3-isocyanato-1,5,5-trimethylcyclohexan (IPDI) und Aminosilan, in der Tabelle als PDI-Trimer bezeichnet.

### Die mechanischen Eigenschaften der Klebstoffe wurden wie folgt getestet:

Die zu beschichtenden Substrate (PET/Aluminium-Vorverband und Polypropylen (PP)) wurden auf DIN A4-Größe formatiert. Anschließend wurde die Trägerfolie PET/AI auf einer planaren Unterlage fixiert und die Klebstoffzusammensetzung mittels Rakel auf die Aluminiumseite des Vorverbundes aufgetragen. Die beschichtete Trägerfolie wurde anschließend 5 Minuten bei 90°C im Trockenschrank getrocknet.

Die so erhaltenen Verbunde wurden unter Druck (8 kg) zwischen Metallplatten bei Raumtemperatur oder 40 bis 60°C im Trockenschrank ausgehärtet. Nach 7 und nach 14 Tagen wurden die Verbundhaftung der Laminate geprüft. Darüber hinaus wurde die Verbundhaftung nach Sterilisation und Beutelsterilisation mit einem aggressiven Füllgut (bestehend aus 0,1% Ölsäure, Wasser und Maisstärke) gemessen. Die ermittelten Werten sind in Tabelle 3 zusammengefasst.

Als Vergleich wurde der kommerziell erhältlicher Klebstoff Loctite Liofol LA 2760 / LA 7371 verwendet.

**Tabelle 3:**

| Klebstoff | | VH₁₄¹⁾ | | VH_{St}²⁾ | | VH_{Beutei}³⁾ | |
|---|---|---|---|---|---|---|---|
| Polyesterpolyol | NCO | Wert | Optik | Wert | Optik | Wert | Optik |
| Beispiel 1 | PDI-Trimer | 4,3 | Sep | 7,7 | MD⁴⁾ | 5,9 | MD |
| | | 4,6 | Sep | 7,6 | MD | 5,8 | MD |
| Beispiel 1 | Loctite LA 7371 | 4,5 | Sep | 6,7 | MD | 5,4 | MD |
| | | 5,8 | MD | 6,9 | MD | 5,8 | MD |
| Beispiel 2 | PDI-Trimer | 2,4 | Sep | 4,5 | Sep⁵⁾ | 2,7 | Sep |
| | | 1,8 | Sep | 4,4 | Sep | 2,5 | Sep |
| Beispiel 2 | Loctite LA 7371 | 3,1 | Sep | 3,8 | Sep | 2,3 | Sep |
| | | 2,2 | Sep | 4,4 | Sep | 3,1 | Sep |
| Vergleich | Loctite LA 7371 | 2,4 | Sep | 5,3 | Sep | 0,0 | delam⁶⁾ |

| | | | | | | | |
|---|---|---|---|---|---|---|---|
| ¹⁾ Verbundhaftung nach 14 Tagen ²⁾ Verbundhaftung nach Sterilisation (131°C/45 Min) 14 Tage ³⁾ Verbundhaftung nach Beutelsterilisation (131°C/30 Min) 14 Tage; Maisstärke/Ölsäure (0.1%) ⁴⁾ MD: Materialdehnung ⁵⁾ Sep.: Separierung ⁶⁾ delam: Delamination | | | | | | | |

Wie sich aus der Tabelle 3 entnehmen lässt, wurden mit dem erfindungsgemäßen Klebstoff auch unter Belastung gute Verbundhaftungen erzielt, die mit herkömmlichen Polyesterpolyolbasierten Klebstoffen nicht erreicht werden konnten.

## Patentansprüche

1. Klebstoffzusammensetzung umfassend
a) mindestens ein Polyesterpolyol auf Basis von Betulin; und
b) mindestens eine NCO-terminierte Verbindung,
wobei das Polyesterpolyol aus einer Reaktionsmischung gewonnen wird, die die folgenden Monomereinheiten umfasst:
i) Betulin in einer Menge von 5- 50 Gew.-% vorzugsweise 25-35 Gew.-%
ii) Dicarbonsäure in einer Menge von 5 bis 45 Gew.-%, vorzugsweise 8 bis 40 Gew.-%; und
iii) Triglycerid in einer Menge von 20 bis 80 Gew.-%, vorzugsweise 40 bis 70 Gew.-%.
jeweils bezogen auf das Gesamtgewicht der Monomereinheiten,
**dadurch gekennzeichnet, dass** der Anteil an Polyesterpolyol auf Basis von Betulin 20-90 Gew.-% beträgt bezogen auf das Gesamtgewicht der lösungsmittelfreien Klebstoffzusammensetzung.

2. Klebstoffzusammensetzung gemäß einem oder mehrerer der vorangehenden Ansprüche, **dadurch gekennzeichnet, dass** die Dicarbonsäure ausgewählt ist aus der Gruppe bestehend Bernsteinsäure, Adipinsäure, Azelainsäure, Sebazinsäure, Dodekansäure, Tetradekandisäure, Furandiscarbonsäure, Isophthalsäure, Terephthalsäure, Orthophthalsäure und Mischungen davon.

3. Klebstoffzusammensetzung gemäß Anspruch 1, **dadurch gekennzeichnet, dass** das Triglycerid ausgewählt ist aus der Gruppe bestehend aus Sojaöl, Leinöl, Sonnenblumenöl, Distelöl, Rapsöl, Pugiernusöl, Lichtbussbaumöl, Traubenkernöl, Canolaöl, Maiskeimöl, Cashewkernöl, Fischöl, Rizinusöl, Tallöl, Kokosöl, Palmöl, Palmkernöl, Olivenöl und Mischungen davon und deren Derivanten sowie synthetische oder biotechnisch hergestellte Triglyceride.

4. Klebstoffzusammensetzung gemäß einem oder mehrerer der vorangehenden Ansprüche, **dadurch gekennzeichnet, dass** die NCO-terminierte Verbindung ausgewählt ist aus der Gruppe bestehend aus 1,5-Naphthylendiisocyanat (NDI), 2,4'- oder 4,4`-Diphenylmethandiisocyanat (MDI), Isomere des Toluylendiisocyanats (TDI), Methylentriphenyltriisocyanat (MIT), hydriertes MDI (H12MDI), Tetramethylxylylendiisocyanat (TMXDI), 1-Isocyanatomethyl-3-isocyanato-1,5,5-trimethylcyclohexan (IPDI), Xylylendiisocyanat (XDI), Hexan-1,6-diisocyanat (HDI), Pentamethylendiisocyanat PDI), Dicyclohexylmethandiisocyanat sowie Mischungen davon.

5. Klebstoffzusammensetzung gemäß einem oder mehrerer der vorangehenden Ansprüche, **dadurch gekennzeichnet, dass** der Anteil an Polyesterpolyol auf Basis von Betulin 30 bis 80 Gew.-%, besonders bevorzugt 40 bis 60 Gew.-% beträgt, jeweils bezogen auf das Gesamtgewicht der lösungsmittelfreien Klebstoffzusammensetzung.

6. Klebstoffzusammensetzung gemäß einem oder mehrerer der vorangehenden Ansprüche, **dadurch gekennzeichnet, dass** der Anteil an NCO-terminierter Verbindung 10 bis 80 Gew.-%, vorzugsweise 20 bis 70 Gew.-%, besonders bevorzugt 30 bis 60 Gew.-% beträgt, jeweils bezogen auf das Gesamtgewicht der lösungsmittelfreien Klebstoffzusammensetzung.

7. Klebstoffzusammensetzung gemäß einem oder mehrerer der vorangehenden Ansprüche, **dadurch gekennzeichnet, dass** die Zusammensetzung ein Verhältnis von NCO:OH von 1 bis 5, vorzugsweise 1,2 bis 3 aufweist.

8. Verfahren zur Herstellung einer Klebstoffzusammensetzung gemäß einem oder mehrerer der Ansprüche 1 bis 7, umfassend die folgenden Schritte:
a) Bereitstellen einer Mischung umfassend
i) Betulin in einer Menge von 5- 50 Gew.-% vorzugsweise 25-35 Gew.-%
ii) Dicarbonsäure in einer Menge von 5 bis 45 Gew.-%, vorzugsweise 8 bis 40 Gew.-%; und
iii) Triglycerid in einer Menge von 20 bis 80 Gew.-%, vorzugsweise 40 bis 70 Gew.-%. jeweils bezogen auf das Gesamtgewicht der Monomereinheiten,
b) Umsetzen des aus der Mischung in Schritt a) erhaltenen Reaktionsprodukts mit einer NCO-terminierten Verbindung,
**dadurch gekennzeichnet, dass** der Anteil an Polyesterpolyol auf Basis von Betulin 20-90 Gew.-% beträgt, bezogen auf das Gesamtgewicht der lösungsmittelfreien Klebstoffzusammensetzung.

9. Klebstoff erhältlich durch Aushärten einer Klebstoffzusammensetzung nach einem oder mehrerer der Ansprüche 1 bis 7.

10. Verwendung einer Klebstoffzusammensetzung nach einem oder mehrerer der Ansprüche 1 bis 7 oder eines Klebstoffs nach Anspruch 9 als Kaschierklebstoff.

11. Artikel umfassend eine Klebstoffzusammensetzung nach einem oder mehrerer der Ansprüche 1 bis 7 oder einen Klebstoff nach Anspruch 9.

12. Verfahren zum Verkleben von mindestens zwei Substraten, **dadurch gekennzeichnet, dass** auf mindestens ein Substrat eine Klebstoffzusammensetzung gemäß einem oder mehrerer der Ansprüche 1 bis 7 aufgetragen wird und danach die mindestens zwei Substrate zusammengefügt werden.

## Claims

1. An adhesive composition comprising:
a) at least one polyester polyol based on betulin; and
b) at least one NCO-terminated compound,
wherein the polyester polyol is obtained from a reaction mixture comprising the following monomer units:
i) betulin in an amount of from 5 to 50 wt.%, preferably 25 to 35 wt.%
ii) dicarboxylic acid in an amount of from 5 to 45 wt.%, preferably 8 to 40 wt.%; and
iii) triglyceride in an amount of from 20 to 80 wt.%, preferably 40 to 70 wt.%.
in each case based on the total weight of the monomer units,
**characterized in that** the proportion of polyester polyol based on betulin is 20 to 90 wt.% based on the total weight of the solvent-free adhesive composition.

2. The adhesive composition according to one or more of the preceding claims, **characterized in that** the dicarboxylic acid is selected from the group consisting of succinic acid, adipic acid, azelaic acid, sebacic acid, dodecanoic acid, tetradecandioic acid, furandicarboxylic acid, isophthalic acid, terephthalic acid, orthophthalic acid, and mixtures thereof.

3. The adhesive composition according to claim 1, **characterized in that** the triglyceride is selected from the group consisting of soybean oil, linseed oil, sunflower oil, safflower oil, rapeseed oil, physic nut oil, light walnut oil, grapeseed oil, canola oil, corn oil, cashew kernel oil, fish oil, castor oil, tall oil, coconut oil, palm oil, palm kernel oil, olive oil and mixtures and derivatives thereof as well as synthetic or biotechnologically prepared triglycerides.

4. The adhesive composition according to one or more of the preceding claims, **characterized in that** the NCO-terminated compound is selected from the group consisting of 1,5-naphthylene diisocyanate (NDI), 2,4'- or 4,4'-diphenylmethane diisocyanate (MDI), isomers of toluene diisocyanate (TDI), methylene triphenyl triisocyanate (MIT), hydrogenated MDI (H12MDI), tetramethylxylylene diisocyanate (TMXDI), 1-isocyanatomethyl-3-isocyanato-1,5,5-trimethylcyclohexane (IPDI), xylylene diisocyanate (XDI), hexane-1,6-diisocyanate (HDI), pentamethylene diisocyanate (PDI), dicyclohexylmethane diisocyanate as well as mixtures thereof.

5. The adhesive composition according to one or more of the preceding claims, **characterized in that** the proportion of polyester polyol based on betulin is 30 to 80 wt.%, particularly preferably 40 to 60 wt.%, in each case based on the total weight of the solvent-free adhesive composition.

6. The adhesive composition according to one or more of the preceding claims, **characterized in that** the proportion of NCO-terminated compound is 10 to 80 wt.%, preferably 20 to 70 wt.%, particularly preferably 30 to 60 wt.%, in each case based on the total weight of the solvent-free adhesive composition.

7. The adhesive composition according to one or more of the preceding claims, **characterized in that** the composition has a ratio of NCO:OH of from 1 to 5, preferably 1.2 to 3.

8. A method for preparing an adhesive composition according to one or more of claims 1 to 7, comprising the following steps:
a) providing a mixture comprising
i) betulin in an amount of from 5 to 50 wt.%, preferably 25 to 35 wt.%
ii) dicarboxylic acid in an amount of from 5 to 45 wt.%, preferably 8 to 40 wt.%; and
iii) triglyceride in an amount of from 20 to 80 wt.%, preferably 40 to 70 wt.%.
in each case based on the total weight of the monomer units,
b) reacting the reaction product obtained from the mixture in step a) with an NCO-terminated compound,
**characterized in that** the proportion of polyester polyol based on betulin is 20-90 wt.%, based on the total weight of the solvent-free adhesive composition.

9. An adhesive obtained by curing an adhesive composition according to one or more of claims 1 to 7.

10. The use of an adhesive composition according to one or more of claims 1 to 7 or an adhesive according to claim 9 as a laminating adhesive.

11. An article comprising an adhesive composition according to one or more of claims 1 to 7 or an adhesive according to claim 9.

12. A method for bonding at least two substrates, **characterized in that** an adhesive composition according to one or more of claims 1 to 7 is applied to at least one substrate and the at least two substrates are subsequently joined together.

## Revendications

1. Composition adhésive comprenant
a) au moins un polyol de polyester à base de bétuline ; et
b) au moins un composé à terminaison NCO,
dans laquelle le polyol de polyester est obtenu à partir d'un mélange réactionnel qui comprend les motifs monomères suivants :
i) bétuline en une quantité allant de 5 à 50 % en poids, de préférence de 25 à 35 % en poids
ii) acide dicarboxylique en une quantité allant de 5 à 45 % en poids, de préférence de 8 à 40 % en poids ; et
iii) triglycéride en une quantité allant de 20 à 80 % en poids, de préférence de 40 à 70 % en poids.
respectivement par rapport au poids total des motifs monomères,
**caractérisée en ce que** la proportion de polyol de polyester à base de bétuline va de 20 à 90 % en poids par rapport au poids total de la composition adhésive sans solvant.

2. Composition adhésive selon une ou plusieurs des revendications précédentes, **caractérisée en ce que** l'acide dicarboxylique est choisi dans le groupe constitué d'acide succinique, acide adipique, acide azélaïque, acide sébacique, acide dodécanoïque, acide tétradécanedioïque, acide furanedicarboxylique, acide isophtalique, acide téréphtalique, acide orthophtalique et des mélanges de ceux-ci.

3. Composition adhésive selon la revendication 1, **caractérisée en ce que** le triglycéride est choisi dans le groupe constitué d'huile de soja, huile de lin, huile de tournesol, huile de carthame, huile de colza, huile de *Jatropha curcas,* huile d'*Aleurites moluccanus,* huile de pépins de raisin, huile de canola, huile de germe de maïs, huile de noix de cajou, huile de poisson, huile de ricin, huile de tall, huile de coco, huile de palme, huile de palmiste, huile d'olive et mélanges et dérivés de celles-ci, ainsi que de triglycérides produits de manière synthétique ou biotechnologique.

4. Composition adhésive selon une ou plusieurs des revendications précédentes, **caractérisée en ce que** le composé à terminaison NCO est choisi dans le groupe constitué de 1,5-diisocyanate de naphtylène (NDI), 2,4'-diisocyanate de diphénylméthane ou 4,4'-diisocyanate de diphénylméthane (MDI), isomères du diisocyanate de toluylène (TDI), triisocyanate de méthylènetriphényle (MIT), MDI hydrogéné (H12MDI), diisocyanate de tétraméthylxylylène (TMXDI), 1-isocyanatométhyl-3-isocyanato-1,5,5-triméthylcyclohexane (IPDI), diisocyanate de xylylène (XDI), hexane-1,6-diisocyanate (HDI), diisocyanate de pentaméthylène (PDI), diisocyanate de dicyclohexylméthane ainsi que des mélanges de ceux-ci.

5. Composition adhésive selon une ou plusieurs des revendications précédentes, **caractérisée en ce que** la proportion de polyol de polyester à base de bétuline va de 30 à 80 % en poids, de manière particulièrement préférée de 40 à 60 % en poids, respectivement par rapport au poids total de la composition adhésive sans solvant.

6. Composition adhésive selon une ou plusieurs des revendications précédentes, **caractérisée en ce que** la proportion de composé à terminaison NCO va de 10 à 80 % en poids, de préférence de 20 à 70 % en poids, de manière particulièrement préférée de 30 à 60 % en poids, respectivement par rapport au poids total de la composition adhésive sans solvant.

7. Composition adhésive selon une ou plusieurs des revendications précédentes, **caractérisée en ce que** la composition présente un rapport NCO:OH allant de 1 à 5, de préférence de 1,2 à 3.

8. Procédé permettant la fabrication d'une composition adhésive selon une ou plusieurs des revendications 1 à 7, comprenant les étapes suivantes :
a) fourniture d'un mélange comprenant
i) bétuline en une quantité allant de 5 à 50 % en poids, de préférence de 25 à 35 % en poids
ii) acide dicarboxylique en une quantité allant de 5 à 45 % en poids, de préférence de 8 à 40 % en poids ; et
iii) triglycéride en une quantité allant de 20 à 80 % en poids, de préférence de 40 à 70 % en poids.
respectivement par rapport au poids total des motifs monomères,
b) mise en réaction du produit réactionnel obtenu à partir du mélange à l'étape a) avec un composé à terminaison NCO,
**caractérisé en ce que** la proportion de polyol de polyester à base de bétuline va de 20 à 90 % en poids, par rapport au poids total de la composition adhésive sans solvant.

9. Adhésif pouvant être obtenu par durcissement d'une composition adhésive selon une ou plusieurs des revendications 1 à 7.

10. Utilisation d'une composition adhésive selon une ou plusieurs des revendications 1 à 7 ou d'un adhésif selon la revendication 9 comme adhésif de contrecollage.

11. Article comprenant une composition adhésive selon une ou plusieurs des revendications 1 à 7 ou un adhésif selon la revendication 9.

12. Procédé permettant le collage d'au moins deux substrats, **caractérisé en ce qu'**une composition adhésive selon une ou plusieurs des revendications 1 à 7 est appliquée sur au moins un substrat, puis les au moins deux substrats sont assemblés.
